# EUROPÄISCHE PATENTSCHRIFT

(11) **EP 1 315 236 B1**
(45) Veröffentlichungstag und Bekanntmachung des Hinweises auf die Patenterteilung: **28.12.2005**
(21) Anmeldenummer: 02023582.6
(22) Anmeldetag: 23.10.2002
(51) Int. Cl.: H01Q 3/26, H01Q 21/00, H04B 1/18, G01S 7/40, H03D 7/12

(54) **Aktive Empfangs-Gruppenantenne**
Active receiving antenna array
Réseau d'antennes réceptrice active

(30) Priorität: 22.11.2001 DE 10157216
(43) Veröffentlichungstag der Anmeldung: 28.05.2003
(73) Patentinhaber: EADS Deutschland GmbH, 85521 Ottobrunn (DE)
(72) Erfinder: Solbach, Klaus, Prof. Dr., 45473 Mülheim (DE)
(74) Vertreter: Meel, Thomas

(56) Entgegenhaltungen:
- WO-A-99/31755
- DE-A- 19 941 473
- US-A- 5 412 414
- DREHER A ET AL: "Planar digital-beamforming antenna for satellite navigation" MICROWAVE SYMPOSIUM DIGEST, 1999 IEEE MTT-S INTERNATIONAL ANAHEIM, CA, USA 13-19 JUNE 1999, PISCATAWAY, NJ, USA,IEEE, US, 13. Juni 1999 (1999-06-13), Seiten 647-650, XP010343456 ISBN: 0-7803-5135-5
- CASE M ET AL INSTITUTE OF ELECTRICAL AND ELECTRONICS ENGINEERS: "AN X-BAND MONOLITHIC ACTIVE MIXER IN SIGE HBT TECHNOLOGY" 1996 IEEE MTT-S INTERNATIONAL MICROWAVE SYMPOSIUM DIGEST. SAN FRANCISCO, JUNE 17 - 21, 1996, IEEE MTT-S INTERNATIONAL MICROWAVE SYMPOSIUM DIGEST, NEW YORK, IEEE, US, Bd. VOL. 3, 17. Juni 1996 (1996-06-17), Seiten 655-658, XP000652773 ISBN: 0-7803-3247-4

## Beschreibung

Die Erfindung betrifft eine Empfangs-Gruppenantenne gemäß dem Oberbegriff des Patentanspruchs 1.

In aktiven Empfangs-Gruppenantennen, welche üblicherweise aus Einzel- oder Untergruppenelementen bestehen, werden die empfangenen Signale (Radiofrequenz-(RF)- oder Hochfrequenzsignale (HF)) in ein Zwischenfrequenzbereich (Basisband) umgesetzt. Mittels digitaler oder analoger Signalüberlagerung, sogenanntem "Beamforming", im Zwischenfrequenz- bzw. Basisbandbereich können elektronisch gesteuerte Antennencharakteristiken erzeugt werden. Dazu erfolgt eine Umsetzung der Signale der Antennen-Elemente bzw. der Untergruppenelemente in einer Schaltung umfassend rauscharme Vorverstärker und Frequenzkonverter (Mischerschaltungen). Dabei ist zum Betrieb der Mischerschaltung ein Lokaloszillatorsignal und zum Kalibration der Gesamtschaltung der Gruppenantenne ein Kalibrationssignal nötig.

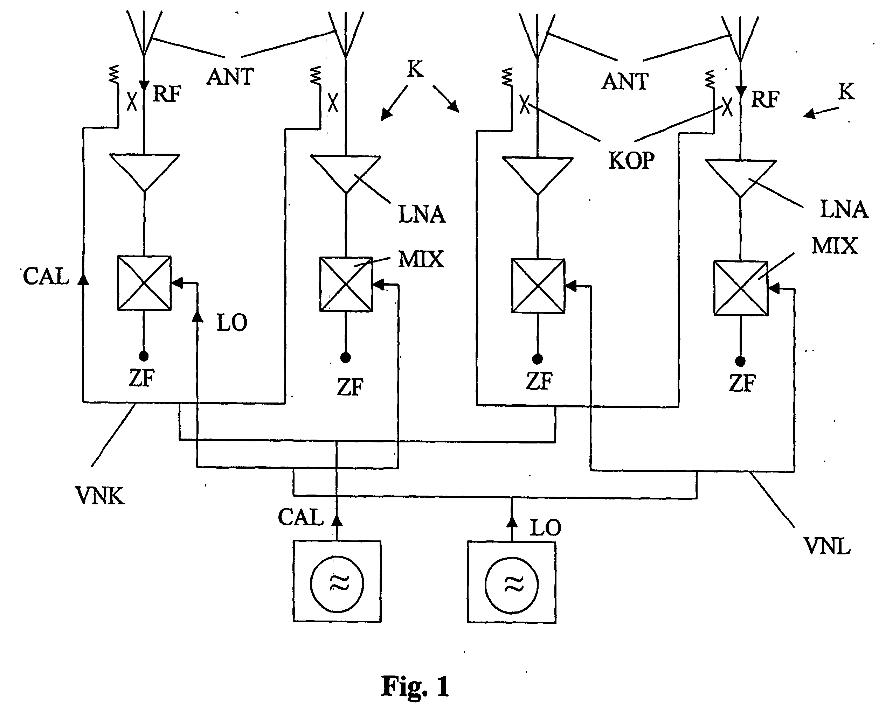

Fig. 1 zeigt eine Empfangs-Gruppenantenne mit beispielhaft 4 Kanälen gemäß dem Stand der Technik. Jeder Kanal K umfaßt dabei ein Antennenelement ANT welches mit einem Vorverstärker, üblicherweise einem rauscharmen Vorverstärker (LNA), verbunden ist. Dem Vorverstärker LNA ist ein Mischer MIX nachgeschaltet, wobei der Ausgang des LNA mit dem ersten Eingang des Mischers MIX verbunden ist. Am Ausgang des Mischers MIX liegt das Zwischenfrequenzsignal ZF an und kann abgegriffen werden.

Zur Kalibration der Gesamtschaltung wird in jedem Kanal K dem Empfangssignal RF am Ausgang des Antennenelements ANT ein Kalibrationssignal CAL überlagert. Diese Überlagerung erfolgt üblicherweise mittels eines Kopplers KOP, welcher z.B. ein 3dB-Koppler sein kann. Das Kalibrationssignal wird dabei zentral in einer bekannten Schaltung erzeugt und mittels eines Verteilernetzwerks VNK den einzelnen Kopplern KOP der Kanäle K zugeführt.

Zum Betrieb der Mischer MIX wird ein Lokaloszillatorsignal LO, welches zentral in einem Lokaloszillator erzeugt wird, mittels eines weiteren Verteilernetzwerks VNL den Mischer MIX der einzelnen Kanäle K zugeführt. Die Mischer MIX sind dabei als sogenannte balancierte Mischer ausgebildet. Dabei werden das umzusetzende Signal, also das Empfangssignal des Antennenelements (ANT) - auch als Nutzsignal bezeichnet - und das Lokaloszillatorsignal LO dem Mischer MIX an zwei verschiedenen Toren zugeführt.

Der Nachteil dieser Verschaltung ist, dass das zentrale Lokaloszillatorsignal bei großer Kanalanzahl mit einer sehr hohen Leistung erzeugt werden muß. Ein weiterer Nachteil ist, dass aufgrund der zwei getrennten Netzwerke ein hoher Verschaltungsaufwand nötig ist. Dies führt insbesondere bei einer Antennenstruktur in planarer Technik zu einer Bauform der Antenne mit einer großen Zahl von Leiterplattenebenen (Mehrschichtaufbau in Streifenleitungstechnik) [1]. Hieraus resultieren weitere Nachteile hinsichtlich der Herstellungskosten der Gruppenantenne.

Es ist somit Aufgabe der Erfindung, eine aktive Empfangs-Gruppenantenne mit einer Verschaltung anzugeben, welche zu einer wesentlichen Vereinfachung der Antennenstruktur führt und mit einer geringen Anzahl von Leiterplattenebenen realisierbar ist.

Diese Aufgabe wird mit der Gruppenantenne gemäß Patentanspruch 1 gelöst. Vorteilhafte Ausgestaltungen der erfindungsgemäßen Gruppenantenne sind Gegenstand von Unteransprüchen.

Erfindungsgemäß ist ein für das zentrale Lokaloszillator- und Kalibrationssignal gemeinsames Verteilernetzwerk vorhanden, welches derart verschaltet ist, dass das zentrale Lokaloszillator- und Kalibrationssignal am Ausgang des Empfangs-Antennenelements in die Schaltung eingekoppelt wird.

In dem Vorverstärker der erfindungsgemäßen Schaltung werden somit das schwache Empfangssignal des Antennenelements, das schwache zentrale Kalibrationssignal und das stärkere zentrale Lokaloszillatorsignal verstärkt. Der Vorteil hierbei ist, dass der Pegel des zentralen Lokaloszillatorsignals im Vergleich zum Stand der Technik niedriger gewählt werden kann, da aufgrund des Vorverstärkers in der erfindungsgemäßen Schaltung der Pegel des Lokaloszillatorsignal angehoben wird.

Zweckmäßig wird die Verstärkung bzw. der Pegel des zentralen Lokaloszillatorsignals dabei derart gewählt, dass der Vorverstärker nicht in Sättigung geht und somit seine niedrige Rauschzahl behält. Dabei bewirkt die Verstärkung des Pegels des zentralen Lokaloszillatorsignals durch den Vorverstärker insbesondere eine Sättigung der dem Vorverstärker nachgeschalteten Stufe. Diese Stufe zeigt somit nichtlineare Eigenschaften, was bei gleichzeitiger Anwesenheit von schwachen Signalen aus den Empfangs-Antennenelementen, einem schwachen Kalibrationssignal und dem starken Lokaloszillatorsignal zur Frequenzumsetzung der schwachen Signale in den Zwischenfrequenzbereich führt. Die Stufe wirkt damit als Mischer mit parametrischer Mischung.

Die Mischer-Stufe kann darüber hinaus vorteilhaft als unbalancierter Mischer mit additiver Mischung ausgelegt werden. Dabei kann in dem Mischer als parametrisch gesteuertes Element z.B. ein Bipolar- oder Feldeffekttransistor oder eine Diode eingesetzt werden. Der Vorteil einer Verschaltung des Mischers als unbalancierter Mischer ist, dass dem Mischer das Nutzsignal und das Lokaloszillatorsignal am demselben Tor zugeführt werden.

Mit der erfindungsgemäßen Verschaltung der Gruppenantenne ist es möglich, dass das Lokaloszillatorsignal mit einer Phasenumkehr zwischen benachbarten Kanälen versehen wird. Dies führt insbesondere bei Betrachtung der unerwünschten Abstrahlung des Lokaloszillatorsignals der Gruppenantenne zu einer Teilauslöschung der von der Antenne abgestrahlten Signale. Somit kann die Abstrahlung des Lokaloszillatorsignals reduziert werden. Dies kann aber auch durch zusätzliche Filterelemente in jedem Antennenelement selbst realisiert werden.

Der Mischer kann aber auch vorteilhaft als eine weitere Verstärkerstufe ausgebildet sein, welche mittels geeigneter Betriebsspannungen als aktiver Mischer betrieben werden kann. Dadurch kann, das Konversionsverhalten des Mischers optimiert werden. Zweckmäßig ist der Mischer mit Filterelementen für die Signalfrequenz (Nutzfrequenz) der Antennenelemente, die Lokaloszillatorfrequenz, die Zwischenfrequenz und die Spiegelfrequenz beschaltet [2].

Vorteilhaft kann an den Eingang des Mischers ein Filter geschaltet sein, mittels dem ein in der Schaltung erzeugtes Spiegelfrequenzsignal ausgefiltert, hingegen das Lokaloszillator- und Empfangssignal durchgelassen wird. Des weiteren ist es vorteilhaft möglich, an den Ausgang des Mischers ein weiteres Filter zu schalten. Mittels dieses Filters ist es möglich, das Zwischenfrequenzsignal am Ausgang des Mischers auszukoppeln. Die übrigen Signale werden mittels geeignet gewählter Impedanzen abgeschlossen. Dadurch wird das Konversionsverhalten des Mischers optimiert.

Die Filtereigenschaften der erfindungsgemäßen Gruppenantenne können darüber hinaus erweitert werden und zur Unterdrückung von Empfangsleistung im Spiegelfrequenzbereich verwendet werden, um eine geringe Störempfindlichkeit und niedrige (Einseitenband-) Rauschzahl der Empfangskanäle zu realisieren. Außerdem kann die Reihenschaltung aus Verstärkerstufe und Mischer eine hohe Dämpfung bei der Zwischenfrequenz aufweisen, wodurch der Empfang von Zwischenfrequenzsignalen unterdrückt werden kann.

Ein weiterer Vorteil der erfindungsgemäßen Empfangs-Gruppenantenne ist, dass aufgrund des gemeinsamen Verteilernetzwerks für das Lokaloszillator- und Kalibrationssignal Leiterplattenebenen bei der Realisierung der Antennenstruktur in planarer Technik eingespart werden können. Außerdem führt die erfindungsgemäße Verschaltung in Form einer Reihenschaltung aus rauscharmem Vorverstärker und unbalanciertem Mischer zu einer weiteren Einsparung von Leiterplattenebenen. Hieraus ergeben sich dann weitere Vorteile hinsichtlich der Herstellungskosten.

Die erfindungsgemäße Empfangs-Gruppenantenne kann vorteilhaft in Empfangssystemen der Satellitenkommunikation und der Radiometrie, insbesondere aufgrund des sehr niedrigen Signalpegels und der sehr niedrigen Signaldynamik, eingesetzt werden. Weitere vorteilhafte Anwendungsbereiche sind Funknetzwerke, z.B. Wireless LAN (local area network), der Mobilfunk mit Space Division Multiple Access/SDMA-Technik (z.B. Smart Antennas) sowie Radar-Sensoren.

Weitere vorteilhafte Ausführung der erfindungsgemäßen Gruppenantenne werden anhand von Zeichnungen näher erläutert. Es zeigen
- Fig. 1: eine Empfangs-Gruppenantenne mit beispielhaft 4 Kanälen in einer Verschaltung gemäß dem Stand der Technik mit getrennten Verteilernetzwerken für das Lokaloszillator- und Kalibrationssignal,
- Fig. 2: eine Empfangs-Gruppenantenne mit beispielhaft 4 Kanälen in einer erfindungsgemäßen Verschaltung mit einem gemeinsamen Verteilernetzwerk für das Lokaloszillator- und Kalibrationssignal,
- Fig. 3: eine erste vorteilhafte Ausführung einer Ankopplung des gemeinsamen Verteilernetzwerks für das Lokaloszillator- und Kalibrationssignal an die Schaltung zur Umsetzung des Empfangssignals in ein Zwischenfrequenzsignal,
- Fig. 4: eine zweite vorteilhafte Ausführung einer Ankopplung des gemeinsamen Verteilernetzwerks für das Lokaloszillator- und Kalibrationssignal an die Schaltung zur Umsetzung des Empfangssignals in ein Zwischenfrequenzsignal,
- Fig. 5: eine dritte vorteilhafte Ausführung einer Ankopplung des gemeinsamen Verteilernetzwerks für das Lokaloszillator- und Kalibrationssignal an die Schaltung zur Umsetzung des Empfangssignals in ein Zwischenfrequenzsignal,
- Fig. 6: eine vierte vorteilhafte Ausführung einer Ankopplung des gemeinsamen Verteilernetzwerks für das Lokaloszillator- und Kalibrationssignal an die Schaltung zur Umsetzung des Empfangssignals in ein Zwischenfrequenzsignal,
- Fig. 7: in Schnittdarstellung eine beispielhafte Ausführung einer in Mehrschichtaufbau realisierten Antennenstruktur,
- Fig. 8: eine vorteilhafte Ausführung zur Strahlungseinspeisung des Lokaloszillatorund Kalibrationssignal in die Antennenelemente.

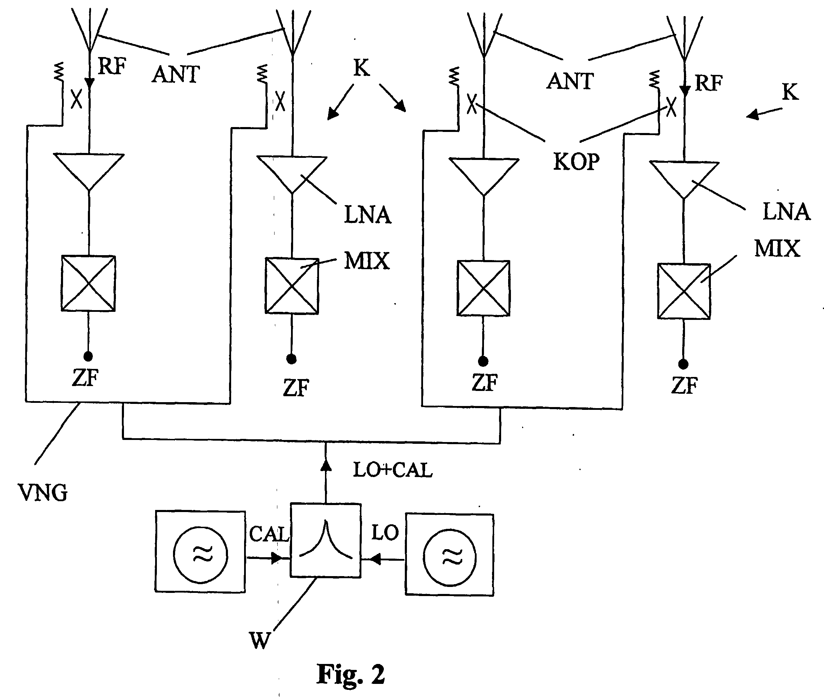

Fig. 2 zeigt eine Empfangs-Gruppenantenne mit beispielhaft 4 Kanälen in einer erfindungsgemäßen Verschaltung mit einem gemeinsamen Verteilernetzwerk für das Lokaloszillator- und Kalibrationssignal. Jeder Kanal K ist durch eine Reihenschaltung von einem Antennenelement ANT, einem Koppler KOP, einem rauscharmen Verstärker LNA und einem Mischer MIX in dieser Reihenfolge aufgebaut. Selbstverständlich kann der Verstärker dabei aus mehreren Verstärkerstufen bestehen.

Am Ausgang des Mischers MIX wird das Zwischenfrequenzsignal ZF des jeweiligen Kanals abgegriffen. Die einzelnen Koppler KOP der Kanäle K sind über das gemeinsame Verteilernetzwerk VNG miteinander verbunden. In dieses Verteilernetzwerk VNG werden mittels einer Weiche W ein zentral erzeugtes Kalibrationssignal CAL und ein Lokaloszillatorsignal LO eingespeist.

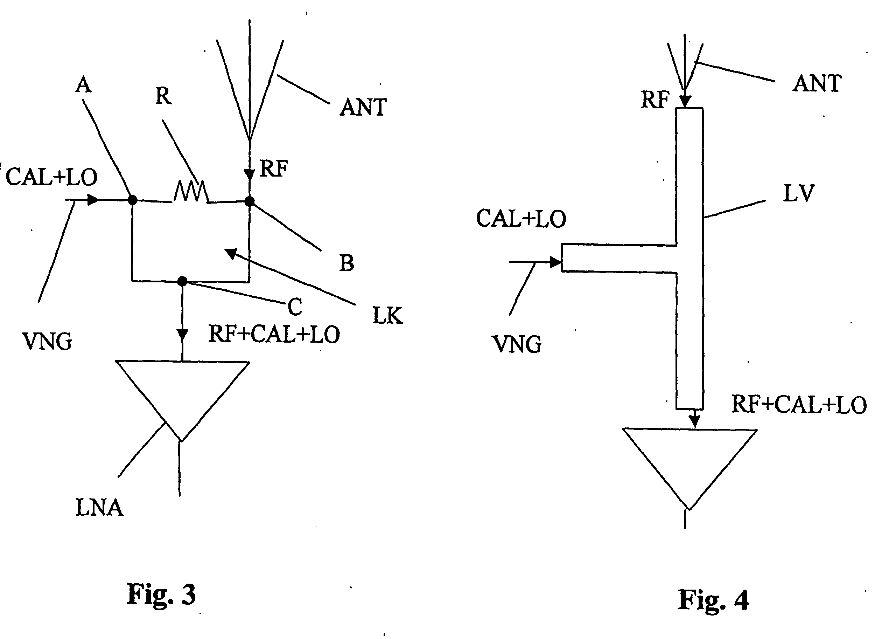

Eine erste vorteilhafte Ausführung zur Ankopplung des Verteilernetzwerks für das Lokaloszillator- und Kalibrationssignal an die Schaltung zeigt Fig. 3. Das Verteilernetzwerk VNG wird mittels eines Leistungskombinierers LK nach Wilkinson in die Schaltung eingekoppelt. Der Leistungskombinierer LK nach Wilkinson ist eine 3-Punkt-Schaltung, wobei die Anschlußpunkte A, B, C die Endpunkte eines Y bilden.

In der in Fig. 3 gezeigten vorteilhaften Ausführung zur Ankopplung des Verteilernetzwerks für das Lokaloszillator- LO und Kalibrationssignal CAL an die Schaltung wird das Verteilernetzwerk VNG mit Punkt A des Leistungskombinierers LK verbunden. Das Antennenelement ANT ist mit Punkt B des Leistungskombinierers LK verbunden. Punkt C des Leistungskombinierers LK ist mit dem Eingang des Vorverstärkers LNA verbunden. Zusätzlich sind die Anschlußpunkte A und B des Leistungskombinierers LK mittels eines Widerstands R miteinander verbunden.

In dem Punkt C des Leistungskombinierers LK werden somit das Lokaloszillator- LO und Kalibrationssignal CAL aus dem Verteilernetzwerk VNG und das Empfangssignal RF aus dem Antennenelement ANT miteinander kombiniert und dem Eingang des Vorverstärkers LNA zugeführt. Der Widerstand R zwischen den Anschlußpunkten A und B dient dazu, die bei der Kombination der Signale entstandenen unsymmetrischen Signalanteile zu dämpfen. Der Vorteil dieser Verschaltung ist, dass das Verteilernetzwerk VNG und das Antennenelement ANT voneinander entkoppelt sind, so dass aus dem Leistungskombinierer LK kein Signalanteil in Richtung des Antennenelements ANT gelangt.

Fig. 4 zeigt eine zweite vorteilhafte Ausführung zur Ankopplung des Verteilernetzwerks VNG an die Schaltung zur Umsetzung des Empfangssignals in ein Zwischenfrequenzsignal (im weiteren als Umsetzungsschaltung bezeichnet). Das Verteilernetzwerk VNG wird hierbei mittels einer reaktiven Leitungsverzweigung LV zwischen dem Antennenelement ANT und dem ersten Vorverstärker LNA an die Umsetzungsschaltung angekoppelt. Die reaktive Leitungsverzweigung kann dabei z.B. eine Streifenleitung, Koaxleitung oder eine Hohlleitung sein.

Des weiteren ist es vorteilhaft möglich, zwischen das Antennenelement ANT und die reaktive Leitungsverzweigung ein Filter (nicht dargestellt) zu schalten. Dieses Filter dient dazu, in Richtung des Antennenelements ANT laufende Signalanteile des Lokalozillators- LO und Kalibrationssignals CAL zu unterdrücken.

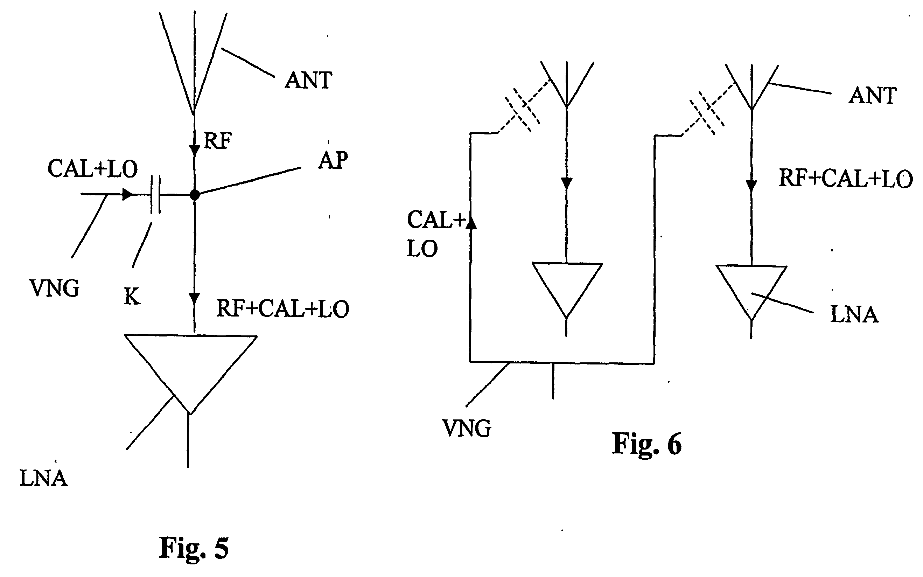

Eine dritte vorteilhafte Ausführung zur Ankopplung des Verteilernetzwerks VNG an die Schaltung zeigt Fig. 5. Hierbei ist das Verteilernetzwerk VNG kapazitiv, z.B. mittels eines Kondensators K, an die Umsetzungsschaltung angekoppelt und zwar zwischen dem Antennenelement ANT und dem ersten Vorverstärker LNA. Aus den unter Fig. 4 beschriebenen Gründen ist es auch hier vorteilhaft möglich, ein Filter (nicht dargestellt) zwischen das Antennenelement ANT und dem Ankopplungspunkt AP zu schalten.

In einer in Fig. 6 dargestellten vierten vorteilhaften Ausführung zur Ankopplung des Verteilernetzwerks VNG für das Lokaloszillator- und Kalibrationssignal an die Umsetzungsschaltung, werden das Verteilernetzwerk VNG und das Antennenelement ANT elektromagnetisch miteinander gekoppelt. Die elektromagnetische Kopplung ist in Fig. 6 durch ein gestrichelt dargestelltes Kapazitätssymbol dargestellt.

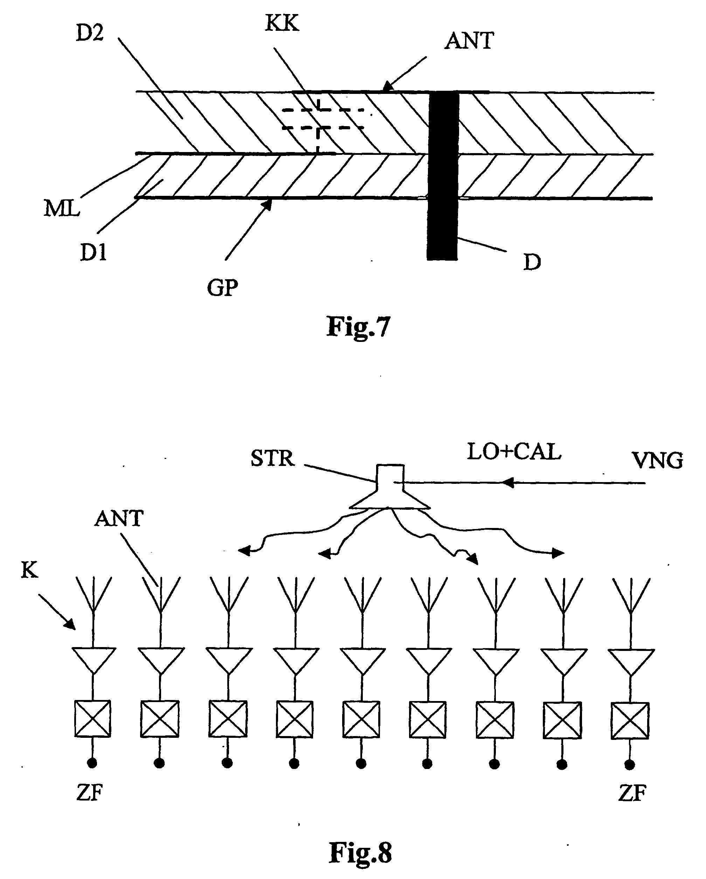

Fig. 7 zeigt hierzu einen Schnitt durch eine in Mehrschichtaufbau realisierte Antennenstruktur. Auf einer metallischen Grundplatte GP ist eine erste Schicht D1 und eine zweite Schicht D2 eines Dielektrikums aufgebracht, wobei auf der Schicht D1 eine Mikrostreifenleitung ML aufgebracht ist, welche mit dem nicht dargestellten Verteilernetzwerk verbunden ist. Auf der zweiten Schicht D2 ist ein flächenhaftes Antennenelement ANT, auch als Patch-Strahler bezeichnet, aufgebracht. Die beiden Schichten D1, D2 und die Grundplatte GP weisen eine durchgängige Durchbrechung D auf, welche der Durchführung der vom dem Antennenelement ANT empfangenen Signale zu weiteren nicht dargestellten Schaltungen dient.
Die Mikrostreifenleitung ML auf der ersten Schicht D1 und das auf die zweite Schicht D2 aufgebrachte Antennenelement ANT sind dabei derart zueinander ausgerichtet, dass die Mikrostreifenleitung ML und das Antennemelement ANT, zwar durch die Schicht D2 voneinander getrennt, einen möglichst kurzen Abstand zueinander aufweisen. Dadurch wird in der zweiten Schicht D2 eine Koppelkapazität KK gebildet, wodurch die Mikrostreifenleitung ML (und somit das Verteilernetzwerk) mit dem Antennenelement ANT gekoppelt wird.

Eine weitere vorteilhafte Ausführung zur Einkopplung des Lokaloszillator- und Kalibarationssignals in die Schaltung ist in Fig. 8 gezeigt. Hierbei ist das Verteilernetzwerk VNG mit einem Strahlerelement STR, z.B. ein Hornstrahler verbunden. Das Strahlerelement STR ist dabei direkt auf die Antennenelemente ANT der Empfangs-Gruppenantenne ausgerichtet. Mittels des Strahlerelements STR werden das Lokaloszillator- LO und Kalibrationssignal CAL direkt in die Antennenelemente ANT eingestrahlt. Dabei können eine ungleiche Verteilung der Signalkopplung und Polarisations-Fehlanpassungen in weiten Grenzen in Kauf genommen werden, da die effektive Rauschzahl der einzelnen Kanäle K nur schwach von der Höhe der Lokaloszillatorsignale LO abhängt. Anderseits kann eine bei der Mischverstärkung (nicht dargestellt) auftretende Abweichung durch nachfolgende, nicht dargestellte Signalverarbeitung (Beamforming) ausgeglichen werden.

### Literatur

[1] Lieke, Dreher, Hekmat, Klefenz, Niklasch, Schroth; "Endgeräte-Antenne mit digitaler Strahlformung für zukünftige Satelliten-Navigationssysteme"; VDE-ITG-Diskussionssitzung "Antennen für Mobile System"; 12. - 13. Oktober 2000, Starnberg
[2] Stephen A. Maas; "The RF and Microwave Circuit Design Cookbook"; 1998, Archtech House, ISBN 0-89006-973-5, Chapter 6 (Active Mixers)

## Patentansprüche

1. Empfangs-Gruppenantenne mit einer Vielzahl von Kanälen zur Umsetzung von Empfangssignalen von Empfangs-Antennenelementen (ANT) in ein Zwischenfrequenzsignal (ZF) mittels einer Schaltung umfassend ein oder mehrere Vorverstärker (LNA) und ein in Reihe geschalteter Mischer (MIX), wobei der Schaltung ein zentral erzeugtes Lokaloszillator- (LO) und Kalibrationssignal (CAL) zugeführt wird, **dadurch gekennzeichnet, dass** ein für das zentrale Lokaloszillator- (LO) und Kalibrationssignal (CAL) gemeinsames Verteilernetzwerk (VNG) vorhanden ist, welches derart verschaltet ist, dass das zentrale Lokaloszillator- (LO) und Kalibrationssignal (CAL) am Ausgang des Empfangs-Antennenelements (ANT) in die Schaltung eingekoppelt wird.

2. Antenne nach Anspruch 1, **dadurch gekennzeichnet, dass** der Mischer (MIX) eine Verstärkerstufe ist, welche mittels ihrer Betriebsspannungen als aktiver Mischer betrieben wird.

3. Antenne nach Anspruch 1, **dadurch gekennzeichnet, dass** der Mischer (MIX) ein unbalancierter Mischer mit additiver Mischung ist.

4. Antenne nach einem der vorangehenden Ansprüchen, **dadurch gekennzeichnet, dass** zwischen dem ersten Vorverstärker (LNA) und dem Mischer (MIX) ein Filter geschaltet ist.

5. Antenne nach einem der vorangehenden Ansprüchen, **dadurch gekennzeichnet, dass** zwischen dem Antennenelement (ANT) und dem Koppler (KOP), mittels dem das zentrale Lokaloszillator- (LO) und Kalibrationssignal (CAL) in die Schaltung eingekoppelt wird, ein Filter geschaltet ist.

6. Antenne nach einem der vorangehenden Ansprüchen, **dadurch gekennzeichnet, dass** das zentrale Lokaloszillator- (LO) und Kalibrationssignal (CAL) mittels eines zwischen dem Antennenelement (ANT) und dem ersten Vorverstärker (LNA) angeordneten Leistungskombinierers (LK) in die Schaltung eingekoppelt wird.

7. Antenne nach Ansprüchen 1 bis 5, **dadurch gekennzeichnet, dass** das zentrale Lokaloszillator- (LO) und Kalibrationssignal (CAL) mittels einer zwischen dem Antennenelement (ANT) und dem ersten Vorverstärker (LNA) vorhandenen reaktiven Leitungsverzweigung (LV) in die Schaltung eingekoppelt wird.

8. Antenne nach Ansprüchen 1 bis 5, **dadurch gekennzeichnet, dass** das zentrale Lokaloszillator- (LO) und Kalibrationssignal (CAL) mittels einer kapazitiven Ankopplung (K) an die Verbindungsleitung zwischen dem Antennenelement (ANT) und dem ersten Vorverstärker (LNA) in die Schaltung eingekoppelt wird.

9. Antenne nach Ansprüchen 1 bis 5, **dadurch gekennzeichnet, dass** das zentrale Lokaloszillator- (LO) und Kalibrationssignal (CAL) mittels einer elektromagnetischen Kopplung zwischen dem Antennenelement (ANT) und dem Verteilernetzwerk (VNG) in die Schaltung eingekoppelt wird.

10. Antenne nach Ansprüchen 1 bis 4, **dadurch gekennzeichnet, dass** an das Verteilernetzwerk (VNG) ein Strahler (STR) zur Einstrahlung des zentralen Lokaloszillator- (LO) und Kalibrationssignal (CAL) in das Antennenelement (ANT) angeschlossen ist.

11. Antenne nach einem der vorangehenden Ansprüchen, **dadurch gekennzeichnet, dass** am Ausgang des Mischers (MIX) ein Filter zur Auskopplung des Zwischenfrequenzsignals (ZF) geschaltet ist.

12. Verwendung einer Antenne nach einem der vorangehenden Ansprüchen in Empfangssystemen der Satellitenkommunikation oder Radiometrie sowie in Kommunikationssystemen, insbesondere Funknetzwerken oder Mobilfunk, und Radarsensoren.

## Claims

1. Receiving antenna array having a large number of channels for conversion of received signals from receiving antenna elements (ANT) to an intermediate-frequency signal (IF) by means of a circuit comprising one or more preamplifiers (LNA) and a series-connected mixer (MIX), with the cirucit being supplied with a centrally produced local-oscillator (LO) and calibration signal (CAL), **characterized in that** a distribution network (VNG) is provided which is common to the central local-oscillator (LO) and calibration signal (CAL) and is connected so that the central local-oscillator (LO) and calibration signal (CAL) is injected into the circuit at the output of the receiving antenna element (ANT).

2. Antenna according to Claim 1, **characterized in that** the mixer (MIX) is an amplifier stage which is operated as an active mixer by means of its operating voltages.

3. Antenna according to Claim 1, **characterized in that** the mixer (MIX) is an unbalanced mixer with additive mixing.

4. Antenna according to one of the preceding claims, **characterized in that** a filter is connected between the first preamplifier (LNA) and the mixer (MIX).

5. Antenna according to one of the preceding claims, **characterized in that** a filter is connected between the antenna element (ANT) and the coupler (KOP) by means of which the central local-oscillator (LO) and calibration signal (CAL) is injected into the circuit.

6. Antenna according to one of the preceding claims, **characterized in that** the central local-oscillator (LO) and calibration signal (CAL) is injected into the circuit by means of a power combiner (LK) which is arranged between the antenna element (ANT) and the first preamplifier (LNA).

7. Antenna according to Claims 1 to 5, **characterized in that** the central local-oscillator (LO) and calibration signal (CAL) is injected into the circuit by means of a reactive line branch (LV) which is provided between the antenna element (ANT) and the first preamplifier (LNA).

8. Antenna according to Claims 1 to 5, **characterized in that** the central local-oscillator (LO) and calibration signal (CAL) is injected into the circuit by means of a capacitor coupling (K) to the connecting line between the antenna element (ANT) and the first preamplifier (LNA).

9. Antenna according to Claims 1 to 5, **characterized in that** the central local-oscillator (LO) and calibration signal (CAL) is injected into the circuit by means of an electromagnetic coupling between the antenna element (ANT) and the distribution network (VNG).

10. Antenna according to Claims 1 to 4, **characterized in that** a radiating element (STR) for injection of the central local-oscillator (LO) and calibration signal (CAL) into the antenna element (ANT) is connected to the distribution network (VNG).

11. Antenna according to one of the preceding claims, **characterized in that** a filter for output of the intermediate-frequency signal (IF) is connected to the output of the mixer (MIX).

12. Use of an antenna according to one of the preceding claims in receiving systems for satellite communication or radiometry, and in communication systems, in particular radio networks or mobile radio, and radar sensors.

## Revendications

1. Réseau d'antenne réceptrice active avec une pluralité de canaux pour la conversion de signaux de réception d'éléments d'antenne réceptrice (ANT) en un signal de fréquence intermédiaire (ZF) au moyen d'un circuit comprenant un ou plusieurs préamplificateurs (LNA) et un mélangeur (MIX) raccordé en série, dans lequel un signal d'oscillateur local (LO) et un signal de calibrage (CAL) produits centralement sont ajoutés au circuit, **caractérisé en ce qu'**il est prévu un réseau de distribution (VNG) commun pour le signal central d'oscillateur local (LO) et le signal central de calibrage (CAL), qui est raccordé de telle façon que le signal central d'oscillateur local (LO) et le signal central de calibrage (CAL) soient injectés dans le circuit à la sortie de l'élément d'antenne réceptrice (ANT).

2. Antenne selon la revendication 1, **caractérisée en ce que** le mélangeur (MIX) est un étage d'amplificateur, qui fonctionne comme mélangeur actif au moyen de ses tensions de fonctionnement.

3. Antenne selon la revendication 1, **caractérisée en ce que** le mélangeur (MIX) est un mélangeur déséquilibré avec un mélange additif.

4. Antenne selon l'une quelconque des revendications précédentes, **caractérisée en ce qu'**un filtre est raccordé entre le premier préamplificateur (LNA) et le mélangeur (MIX).

5. Antenne selon l'une quelconque des revendications précédentes, **caractérisée en ce qu'**un filtre est raccordé entre l'élément d'antenne (ANT) et le coupleur (KOP), au moyen duquel le signal central d'oscillateur local (LO) et le signal central de calibrage (CAL) sont injectés dans le circuit.

6. Antenne selon l'une quelconque des revendications précédentes, **caractérisée en ce que** le signal central d'oscillateur local (LO) et le signal central de calibrage (CAL) sont injectés dans le circuit au moyen d'un combinateur de puissance (LK) disposé entre l'élément d'antenne (ANT) et le premier préamplificateur (LNA).

7. Antenne selon les revendications 1 à 5, **caractérisée en ce que** le signal central d'oscillateur local (LO) et le signal central de calibrage (CAL) sont injectés dans le circuit au moyen d'un branchement de ligne réactive (LV) présent entre l'élément d'antenne (ANT) et le premier préamplificateur (LNA).

8. Antenne selon les revendications 1 à 5, **caractérisée en ce que** le signal central d'oscillateur local (LO) et le signal central de calibrage (CAL) sont injectés dans le circuit au moyen d'un couplage capacitif (K) à la ligne de raccordement entre l'élément d'antenne (ANT) et le premier préamplificateur (LNA).

9. Antenne selon les revendications 1 à 5, **caractérisée en ce que** le signal central d'oscillateur local (LO) et le signal central de calibrage (CAL) sont injectés dans le circuit au moyen d'un couplage électromagnétique entre l'élément d'antenne (ANT) et le réseau de distribution (VNG).

10. Antenne selon les revendications 1 à 4, **caractérisée en ce qu'**une antenne rayonnante (STR) est raccordée au réseau de distribution (VNG) de façon à rayonner le signal central d'oscillateur local (LO) et le signal central de calibrage (CAL) dans l'élément d'antenne (ANT).

11. Antenne selon l'une quelconque des revendications précédentes, **caractérisée en ce qu'**un filtre est raccordé à la sortie du mélangeur (MIX) pour le découplage du signal de fréquence intermédiaire (ZF).

12. Utilisation d'une antenne selon l'une quelconque des revendications précédentes dans des systèmes de réception de la communication par satellites ou de radiométrie ainsi que dans des systèmes de communication, en particulier des réseaux radio ou la téléphonie mobile, et des détecteurs radar.
